# EUROPEAN PATENT APPLICATION

(11) **EP 4 432 225 A1**
(43) Date of publication of application: **18.09.2024**
(21) Application number: 24164106.7
(22) Date of filing: 18.03.2024
(51) Int. Cl.: G06T 7/20, G06T 13/80, H04N 7/01, A63F 13/00

(54) **FRAME INTERPOLATION USING BOTH OPTICAL MOTION AND IN-GAME MOTION**

(30) Priority: 17.03.2023 US 202363490800 P; 14.03.2024 US 202418605789
(71) Applicant: MediaTek Inc., 30078 Hsinchu City (TW)
(72) Inventor: HUANG, Tsung-Shian, Hsinchu City (TW); WANG, Huei-Long, Hsinchu City (TW); ZHANG, Yan-Hong, Hsinchu City (TW); HUANG, Chi-Chiang, Hsinchu City (TW); WANG, Kuo-Yi, Hsinchu City (TW); WANG, An-Li, Hsinchu City (TW); LIN, Chien-Nan, Hsinchu City (TW)
(74) Representative: Pfenning, Meinig & Partner mbB

(57) **Abstract**

A frame interpolation method generates an interpolated frame that is temporally between a first frame and a second frame. A first and a second interpolated frames are generated using motion vectors from a first motion estimator and a second motion estimator, respectively. A weighting map is generated based on indications from the first motion estimator. First pixel locations and second pixel locations in the weighting map are assigned weight values of 1 and 0, respectively. A weighted combination is calculated using the weighting map to produce the interpolated frame output, which includes the first pixel locations from the first interpolated frame and the second pixel locations from the second interpolated frame. The first and the second motion estimators may be an optical flow estimator and the game engine renderer, respectively. Alternatively, the first and the second motion estimators may be the game engine renderer and the optical flow estimator, respectively.

## Description

### CROSS-REFERENCE TO RELATED APPLICATIONS

This application claims the benefit of U.S. Provisional Application No. 63/490,800 filed on March 17, 2023, the entirety of which is incorporated by reference herein.

### TECHNICAL FIELD

Embodiments of the invention relate to the processing of video frames rendered by a game engine.

### BACKGROUND OF THE INVENTION

Frame interpolation takes two frames as input and outputs an interpolated frame. The technique is often used for temporal up-sampling a video to increase the frame rate of videos or to reduce processor loading.

Video games sometimes cannot maintain a sustainable or consistent frame per second (FPS) output due to performance bottlenecks. The unstable FPS can degrade end users' gaming experience; for example, after playing a game for a while, the interaction between the user and the game may become unsmooth due to missing frames. Performance bottlenecks can be caused by excessive load on the processors. One approach to reducing processor loading is to reduce the frame per second (FPS) of the video, and then temporally up-sample the video by inserting interpolated frames between any two consecutive original frames.

Existing methods for interpolating the frames of a video game have weakness in different aspects, which can cause undesirable flickering, dragging, and/or halo effect. Thus, there is a need for improving the techniques for frame interpolation.

### SUMMARY OF THE INVENTION

In one embodiment, a method is provided for generating an interpolated frame output that is temporally between a first frame and a second frame. The first frame and the second frame are rendered by a game engine renderer. The method includes the steps of generating a first interpolated frame temporally between the first frame and the second frame using a first set of motion vectors that are output from a first motion estimator, generating a second interpolated frame temporally between the first frame and the second frame using a second set of motion vectors that are output from a second motion estimator, and generating a weighting map of weight values based on indications generated by the first motion estimator. A first subset of pixel locations in the weighting map are assigned a weight value of 1 and a second subset of pixel locations in the weighting map are assigned a weight value of 0. The method further includes the step of calculating a weighted combination of the first interpolated frame and the second interpolated frame using the weight values to produce the interpolated frame output. The interpolated frame output includes the first subset of pixel locations from the first interpolated frame and the second subset of pixel locations from the second interpolated frame. The first motion estimator is one of an optical flow estimator and the game engine renderer, and the second motion estimator is the other one of the optical flow estimator and the game engine renderer.

In another embodiment, a device is operative to generate an interpolated frame output that is temporally between a first frame and a second frame. The first frame and the second frame are rendered by a game engine renderer. The device includes multiple processors, a memory, and a display. The processors are operative to generate a first interpolated frame temporally between the first frame and the second frame using a first set of motion vectors that are output from a first motion estimator, generate a second interpolated frame temporally between the first frame and the second frame using a second set of motion vectors that are output from a second motion estimator, and generate a weighting map of weight values based on indications generated by the first motion estimator. A first subset of pixel locations in the weighting map are assigned a weight value of 1 and a second subset of pixel locations in the weighting map are assigned a weight value of 0. The processors are further operative to calculate a weighted combination of the first interpolated frame and the second interpolated frame using the weight values to produce the interpolated frame output. The interpolated frame output includes the first subset of pixel locations from the first interpolated frame and the second subset of pixel locations from the second interpolated frame. The first motion estimator is one of an optical flow estimator and the game engine renderer, and the second motion estimator is the other one of the optical flow estimator and the game engine renderer.

Other aspects and features will become apparent to those ordinarily skilled in the art upon review of the following description of specific embodiments in conjunction with the accompanying figures.

### BRIEF DESCRIPTION OF DRAWINGS

The present invention is illustrated by way of example, and not by way of limitation, in the figures of the accompanying drawings in which like references indicate similar elements. It should be noted that different references to "an" or "one" embodiment in this disclosure are not necessarily to the same embodiment, and such references mean at least one. Further, when a particular feature, structure, or characteristic is described in connection with an embodiment, it is submitted that it is within the knowledge of one skilled in the art to effect such feature, structure, or characteristic in connection with other embodiments whether or not explicitly described.
FIG. 1 is a diagram illustrating an overall process of generating an interpolated frame according to one embodiment.
FIG. 2 is a diagram illustrating a process of frame interpolation using weights generated by optical flow according to a first embodiment.
FIG. 3 illustrates an example of weight generation according to the first embodiment.
FIG. 4 is a diagram illustrating a process of frame interpolation using weights generated by game rendering according to a first embodiment.
FIG. 5 illustrates an example of weight generation according to the second embodiment.
FIG. 6 is a flow diagram illustrating a method of frame interpolation according to one embodiment.
FIG. 7 illustrates an example of a device according to one embodiment.

### DETAILED DESCRIPTION OF THE INVENTION

In the following description, numerous specific details are set forth. However, it is understood that embodiments of the invention may be practiced without these specific details. In other instances, well-known circuits, structures, and techniques have not been shown in detail in order not to obscure the understanding of this description. It will be appreciated, however, by one skilled in the art, that the invention may be practiced without such specific details. Those of ordinary skill in the art, with the included descriptions, will be able to implement appropriate functionality without undue experimentation.

The disclosure herein describes frame interpolation methods performed by a device. The device generates an interpolated frame output (IFout) between a first frame F(t-1) and a second frame F(t), where t is a unit of time. The interpolated frame output is generated using both optical flow motion and in-game motion. In a first embodiment, an optical flow estimator generates indications of inaccuracy (a.k.a. a confidence map) during the optical motion generation process based on F(t-1) and F(t). The indications identify potentially inaccurate optical motion vectors based on the amount of change in color values between paired pixels in F(t-1) and F(t). The indications are used to determine, in the interpolated frame output, which pixels from optical flow motion estimation to use and which other pixels from in-game motion estimation to use. In a second embodiment, a game engine renderer generates indications of inaccuracy (a.k.a. a special object label map) when rendering a frame. The indications identify pixel locations of the objects having special visual effects that may cause quality degradation in the interpolated frame sequence. Similar to the first embodiment, these indications can be used to determine, in the interpolated frame output, which pixels from optical flow motion estimation to use and which other pixels from in-game motion estimation to use.

The disclosed technique for frame interpolation combines the benefits and avoids the pitfalls of optical flow and game rendering in terms of motion estimation and motion compensation. Optical flow motion estimation uses two consecutive images to estimate the motion of an object that is in both images. The images do not provide the information for distinguishing a foreground object and a background object. Thus, optical flow motion estimation often encounters problems with occluded objects, which may be caused by a foreground object and a background object moving with different velocities. When a wholly visible background object in frame F(t-1) becomes partially obstructed by a foreground object in frame F(f), the edge between the foreground and background objects may drag both objects in the interpolated frame and may exhibit a halo effect.

On the other hand, a game engine typically has accurate information on every object in a frame sequence. This is because the game engine can use meta-data (e.g., depth information and camera positions) available in the rendering process to calculate the motion of game objects. However, when a frame sequence includes objects with special effects, these objects in the interpolated frame often appear erroneous or otherwise exhibit poor visual quality. Further details on these objects ("special object") and the special effects will be provided later in the disclosure.

The term "motion vector" may be defined as a two-dimensional vector that indicates an offset (i.e., distance), pixel by pixel, from the first position of an object in the first frame to the second position in a second frame. The term "optical motion vector" refers to the motion vector generated by an optical flow technique, and the term "in-game motion vector" refers to the motion vector generated by a game engine renderer.

The term "video" as used herein refers to a sequence of graphics frames such as a video game. The term "real-time" as used herein refers to the time when a graphics user application such as a video game is rendered and displayed; e.g., when a video game is being played by a user.

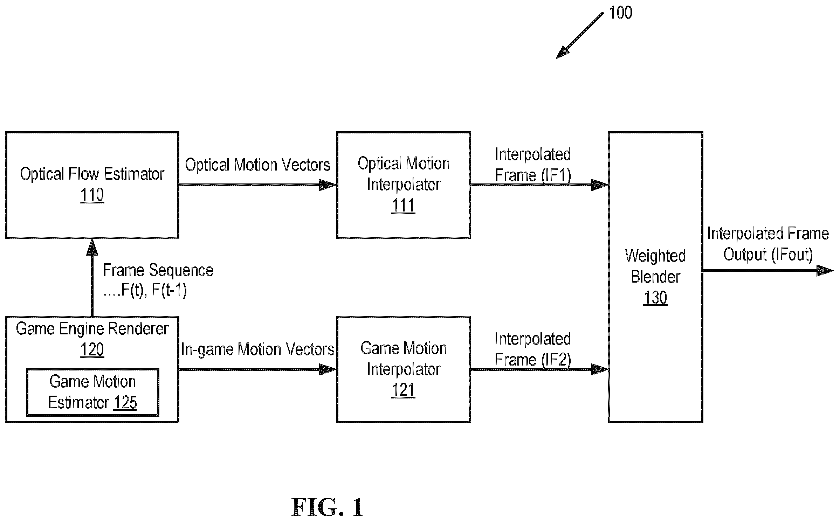

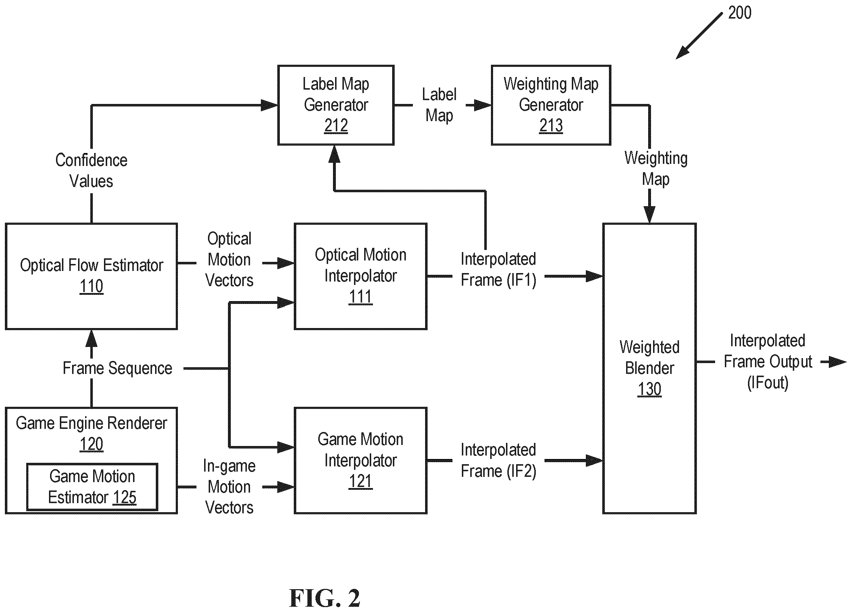

FIG. 1 is a diagram illustrating an overall process 100 of generating an interpolated frame according to one embodiment. The process 100 provides a high-level description of the disclosed frame interpolation methods. A game engine renderer 120 generates a color frame sequence including a first frame F(t-1) and a second frame F(t). The process 100 produces an interpolated frame output (IFout) that is temporally between F(t-1) and F(t) in the frame sequence. An optical flow estimator 110 generates an optical motion vector based on the color values of a pair of feature point pixels in F(t-1) and F(t). A feature point pixel is a pixel of a 2D image to which a point on a graphical object is rendered. A feature point pixel pair, or "pixel pair", refers to two corresponding pixels in two consecutive frames to which the same point of a rendered graphical object is rendered. An example of the color values may be the intensities of red, green, and blue (RGB) colors, or color intensities according to another color model. An optical motion interpolator 111 performs motion compensation by applying the optical motion vectors on F(t-1), and generates an interpolated frame (IF1) as output. The game engine renderer 120 generates in-game motion vectors that describe the camera motion and object motion from F(t-1) to F(t). A game motion interpolator 121 performs motion compensation by applying the in-game motion vectors on F(t-1), and generates an interpolated frame (IF2) as output. A weighted blender 130 generates the interpolated frame output (IFout), which is a weighted combination of the two interpolated frames (IF1 and IF2). The weights for the weighted combination are based on additional information provided by either the optical flow estimator 110 or the game engine renderer 120. The weight generation will be described in detail with reference to FIG. 2 - FIG. 5.

Before describing the weight generation in detail, it is helpful to explain how optical motion vectors and in-game motion vectors may be generated.

The term "optical flow" refers to the determination of optical motion from the color values of each feature point pixel in each frame. One technique of optical flow works by pairing pixels or pixel blocks in one frame to pixels or pixel blocks in the next frame. The pixels or pixel blocks that have the smallest difference in color values are paired. The distance between the paired pixels or pixel blocks is the optical motion and can be described by an optical motion vector. There are several optical flow algorithms based on the Lucas-Kanade method (B. D. Lucas and T. Kanade (1981), An iterative image registration technique with an application to stereo vision. Proceedings of Imaging Understanding Workshop, 1981, pages 121-130). In some embodiments, each frame may be down-sampled to reduce the amount of optical flow computations.

Referring to the example in FIG. 1, for each pixel block in the first frame F(t-1), the optical flow estimator 110 pairs that pixel block with another pixel block in the second frame F(t) that minimizes the difference of color values, e.g., the intensities of red, green, and blue (RGB) colors. The optical flow estimator 110 then determines an optical motion vector from the displacement between the paired pixel blocks in the two frames.

The term "game engine", as commonly known in the field of video games, refers to a software platform that provides libraries, programs, and software tools for game developers to create video games. A game engine provides many functionalities including but not limited to graphics rendering, memory management, real-time computations to simulate the physics of game objects, and special visual effects such as full screen effect and texture animation. A game engine includes a game engine renderer, which, for example, rasterizes primitives (e.g., triangles) of a graphical object into fragments of the object. The fragments that are visible on the 2D screen are referred to as the pixels of the object ("object pixels"). A game engine render calculates in-game motion for temporal anti-aliasing (TAA) and motion blurring. The TAA is a technique for computer-generated video that combines information from past frames and the current frame to remove jaggies in the current frame. Motion blurring can be used to produce an artistic effect in a frame sequence that has moving objects. When combining pixels in past frames with pixels in the current frame, the game engine renderer generates vectors of in-game motion for motion estimation such that pixels in different frames that contain the same portion of an object are blended. An in-game motion vector describes the distance between a pixel pair that contains the same portion of an object in two adjacent frames.

Referring to the example in FIG. 1, the game engine renderer 120 includes a game motion estimator 125 to generate in-game motion vectors for both static objects and dynamic objects in a frame. The game motion estimator 125 calculates camera motion for static objects, and calculates combined camera motion and object motion for dynamic objects. A static object is a rendered graphical object whose vertex coordinates in the 3D world do not move from F(t-1) to F(t). A dynamic object is a rendered graphical object whose vertex coordinates in the 3D world move from F(t-1) to F(t). Thus, an in-game motion for a static object can be determined from the camera motion from F(t-1) to F(t), while an in-game motion for a dynamic object is determined from combined camera motion and object motion from F(t-1) to F(t).

To calculate the camera motion, the game motion estimator 125 uses inputs that include camera coordinates and a depth map of the scene in each of F(t-1) and F(t). A "scene" as used herein includes all static and dynamic objects rendered in F(t-1) and F(t). The depth map indicates, for each pixel in the frame, the distance between the camera and the non-transparent object closest to the camera. In one embodiment, this distance may be represented by a value between 0 and 1. A non-limiting example of calculating the camera motion is described below. Given the camera coordinates and a depth map of the scene in F(t-1), the game motion estimator 125 calculates the 3D world coordinates of each graphical object, and then projects the 3D world coordinates onto a 2D screen. The same calculation is performed for F(t). Pixels containing the same portion of an object in the two frames are paired. The distance between the paired pixels in the two frames is the camera motion. The game motion estimator 125 can calculate the camera motion from F(t-1) to F(t) in one pass.

For a dynamic object (e.g., car, person, animal, etc.), the object's 3D world coordinates change with its movement. To calculate the object motion for each dynamic object, the game motion estimator 125 for F(t-1) uses the object's vertex coordinates in the 3D world and then projects the 3D coordinates onto a 2D screen. The same calculation is performed for F(t). Pixels containing the same portion of the same dynamic object in the two frames are paired. The distance between the paired pixels in the two frames is the object motion, which is added to the camera motion to obtain the combined camera and object motion.

FIG. 2 is a diagram illustrating a process 200 of frame interpolation using weights generated from optical flow according to a first embodiment. In this embodiment, the weights used by the weighted blender 130 are generated based on the output of the optical flow estimator 110. Initially, the optical flow estimator 110 calculates the optical motion vectors from two consecutive frames F(t-1) and F(t) in a frame sequence. The optical motion interpolator 111 uses the optical motion vectors to determine the color values of each interpolated pixel in the interpolated frame IF1. The color values (e.g., RGB values) of the interpolated pixel may be the average RGB values of the pixel pair in frames F(t-1) and F(t) from which an optical motion vector is calculated. Additionally, the game motion estimator 125 generates the in-game motion vectors from F(t-1) and F(t), and a game motion interpolator 121 generates an interpolated frame IF2 based on the in-game motion vectors.

In the first embodiment, the optical flow estimator 110 also generates confidence values of the respective optical motion vectors. A low confidence value (e.g., below a threshold) indicates potentially inaccurate optical motion vectors. In one embodiment, the confidence value may be determined based on the amount of mismatch in color values in a corresponding pixel pair that defines an optical motion vector, where the pixel pair is a feature point pixel pair mentioned before. For example, a greater change in the color values may correspond to a lower confidence value.

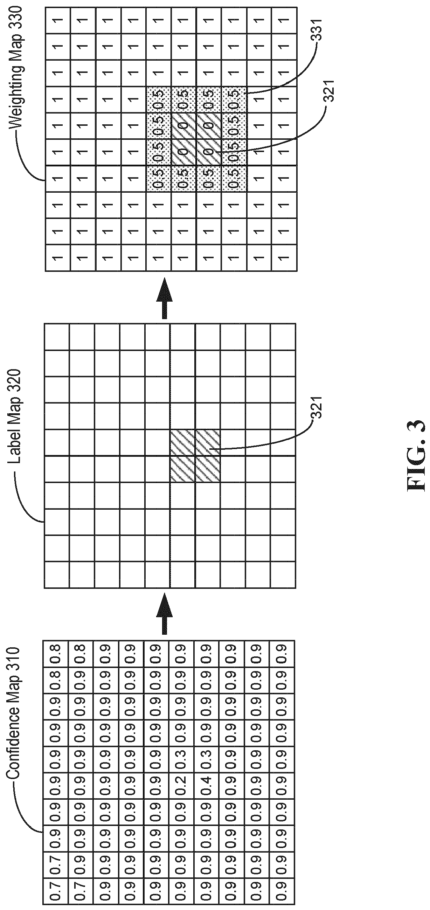

In one embodiment, a label map generator 212 maps the confidence values to respective pixels in the interpolated frame IF1. Referring also to FIG. 3, the leftmost grid represents a confidence map 310, with each grid point represents a pixel in the interpolated frame IF1. The numerical value on each grid point (i.e., pixel) represents the confidence value of that pixel; more specifically, it is the confidence value of the optical motion vector that is used to calculate the color values of that pixel. The label map generator 212 further converts the confidence map 310 into a label map 320 by comparing each confidence value with a threshold. In the example of FIG. 3, the threshold may be 0.5. Thus, a pixel block 321 is labeled to indicate "low confidence". It is noted that an interpolated frame may have any number of pixel blocks labeled as low confidence. The label map 320 is passed onto a weighting map generator 213, which assigns a weight value of 0 to all of the pixels in the pixel block 321. The weighting map generator 213 further identifies a boundary area 331 around the pixel block 321, and assigns the pixels in the boundary area 331 weight values between 0 and 1. The weighting map generator 213 further assigns the pixels outside the boundary area 331 a weight value of 1. In one embodiment, the thickness of the boundary area 331 can be more than one pixel in order to gradually smoothen out the transition of weight values from 0 to 1. In an embodiment where there are multiple pixels in the boundary area 331 between the pixels of weight value = 0 and the pixels of weight value = 1, the weight values assigned to the multiple pixels may be monotonically increasing from 0 to 1 to create a gradual transition. The output of the weighting map generator 213 is a weighting map, such as a weighting map 330 in the example of FIG. 3. Each grid point of the weighting map 330 represents a pixel location corresponding to the same pixel location in each of the interpolated frames IF1 and IF2. The weighting map 330 indicates weight values used by the weighted blender 130 for calculating a weighted combination of the pixel values of the interpolated frames IF1 and IF2. The output of the weighted blender 130 is an interpolated frame output IFout, which includes pixels from IF1 (for pixels having a weight value = 1), pixels from IF2 (for pixels having a weight value = 0), and the rest of the pixels being a weighted combination of both IF1 and IF2.

In some embodiments, one or more of the optical flow estimator 110, the game engine renderer 120, the game motion estimator 125, the optical motion interpolator 111, the game motion interpolator 121, the weighted blender 130, the label map generator 212, and the weighting map generator 213 may be implemented by general-purpose or specialized hardware, software, firmware, or a combination of hardware and software.

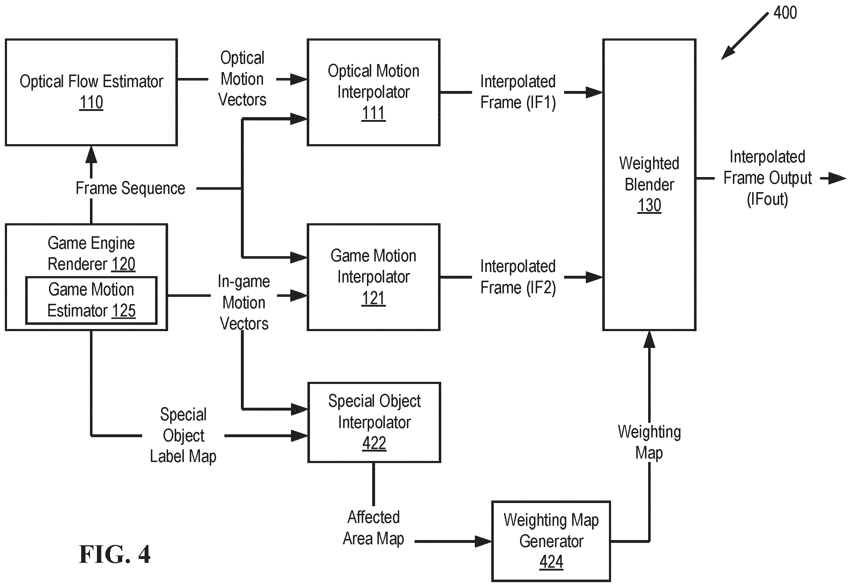

FIG. 4 is a diagram illustrating a process 400 of frame interpolation using weights generated from game rendering according to a second embodiment. In this embodiment, the weights used by the weighted blender 130 are generated based on the output of the game motion estimator 125. Similar to the process 200 in FIG. 2, the optical flow estimator 110 calculates the optical motion vectors from frames F(t-1) and F(t). The optical interpolator 110 uses the optical motion vectors to determine the color value of each interpolated pixel in the interpolated frame IF1. The game motion estimator 125 generates the in-game motion vectors from F(t-1) and F(t), and the game motion interpolator 121 generates the interpolated frame IF2 based on the in-game motion vectors.

In the second embodiment, the game engine renderer 120 also generates a special object label map. A special object is a graphical object with a special effect that can cause inaccuracy in motion compensation, and the inaccuracy may result in a poor visual quality in a frame sequence that includes the interpolated frame. Non-limiting examples of special objects include the shadows of dynamic objects, semi-transparent objects, objects with texture animation, objects with screen space effect, etc. The texture animation refers to the special effect of texture movement when one or more textures are applied to the surface of a graphics object over a frame sequence. The screen space effect refers to the special effect of surface reflections that simulate wet floor surfaces or puddles. The in-game motion vector generated by the game motion estimator 125 may indicate no motion for an object with texture animation or screen space effect. Thus, the interpolated frame would not be able to capture either the texture animation effect or the screen space effect. An example of a semi-transparent object in games is a shield that can be deployed to block incoming attacks. The depth information of a semi-transparent object, which is needed for calculating the camera motion, is usually absent. Thus, frame interpolation of a semi-transparent object typically has a poor visual quality. The shadow of a dynamic object is another type of object that does not interpolate well. A problem with a dynamic object's shadow is the motion in the shadow area. A game engine typically calculates the shadow's motion on the ground. However, the shadow moves with the dynamic object and does not move with the ground. Using the ground motion to interpolate the shadow causes splitting and flickering in the frame.

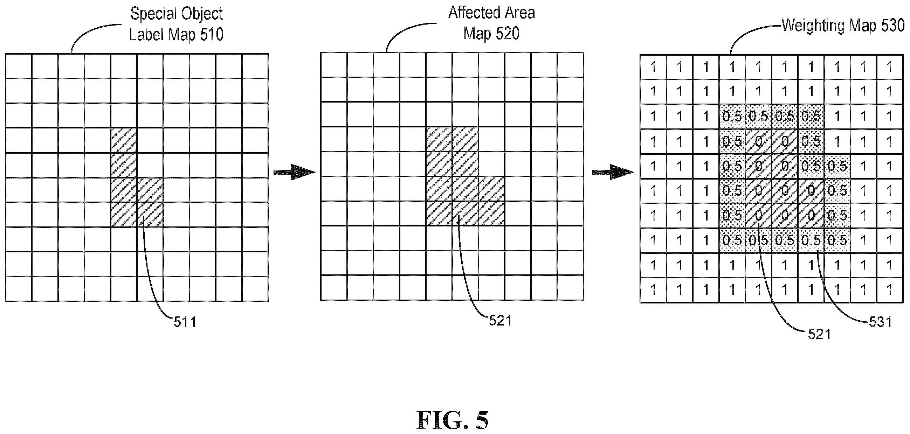

In one embodiment, the game motion estimator 125 identifies each special object by its vertex coordinates in the 3D world space, and projects the special object to a 2D screen. The pixel locations in the first frame F(t-1) occupied by the special object are labeled in the special object label map, an example of which is shown in the leftmost grid in FIG. 5 as a special object label map 510. In the example of FIG. 5, pixel location 511 is labeled as being occupied by a special object.

Referring to FIG. 4, a special object interpolator 422 uses the in-game motion vectors and the special object label map to interpolate each special object between frames F(t-1) and F(t) to thereby determine the pixel locations occupied by the special object from time (t-1) to time (t), inclusive. The special object interpolator 422 identifies the initial pixel locations of the object in F(t-1), and the pixel locations along the movement path of the object that ends in F(t). The union of the initial pixel locations and the pixel locations along the movement path is labeled in an affected area map. An example of an affected area map 520 is shown in the middle grid in FIG. 5, and the union of the pixel locations occupied by the special object is shown as a pixel block 521. A weighting map generator 424 assigns a weight value of 0 to all of the pixels in the pixel block 521. The weighting map generator 424 further identifies a boundary area 531 around the pixel block 521, and assigns the pixels in the boundary area 531 weight values between 0 and 1. The weighting map generator 424 further assigns the pixels outside the boundary area 531 a weight value of 1. In one embodiment, the thickness of the boundary area 531 can be more than one pixel in order to gradually smoothen out the transition of weight values from 0 to 1. In an embodiment where there are multiple pixels in the boundary area 531 between the pixels of weight value = 0 and the pixels of weight value = 1, the weight values assigned to the multiple pixels may be monotonically increasing from 0 to 1 to create a gradual transition.

The output of the weighting map generator 424 is a weighting map, such as a weighting map 530 in the example of FIG. 5. Each grid point of the weighting map 530 represents a pixel location corresponding to the same pixel location in each of the interpolated frames IF1 and IF2. The weighting map 530 indicates weight values used by the weighted blender 130 for calculating a weighted combination of the pixel values of the interpolated frames IF1 and IF2.

In some embodiments, one or more of the optical flow estimator 110, the game engine renderer 120, the game motion estimator 125, the optical motion interpolator 111, the game motion interpolator 121, the weighted blender 130, the special object interpolator 422, and the weighting map generator 424 may be implemented by general-purpose or specialized hardware, software, firmware, or a combination of hardware and software.

In the disclosure herein, the first interpolated frame, the second interpolated frame, and the interpolated frame output all have the same size. That is, they all have the same number of pixels in the height and width dimensions. Furthermore, the various maps containing weighting values or information for generating the weighting values, as shown in the examples of FIG. 3 and FIG. 5, all have the same size as the frames in terms of the number of pixels in the height and width dimensions. Thus, when calculating a weighted combination of two frames, the pixels having the same 2D coordinates in the two frames are multiplied by respective weight values (w and (1-w), respectively) and then added together. The weight value w used by these two pixels has the same 2D coordinates in a weighting map (e.g., 330 in FIG. 3 or 530 in FIG. 5) as the pixels in their respective frames.

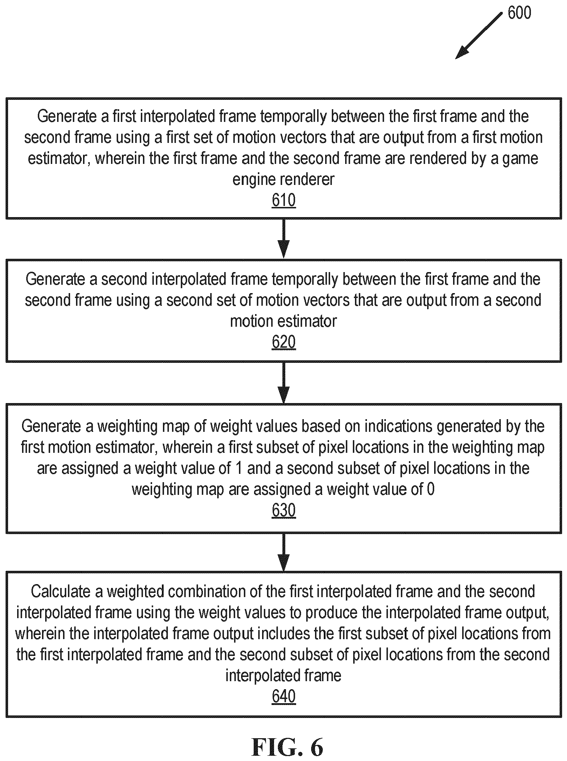

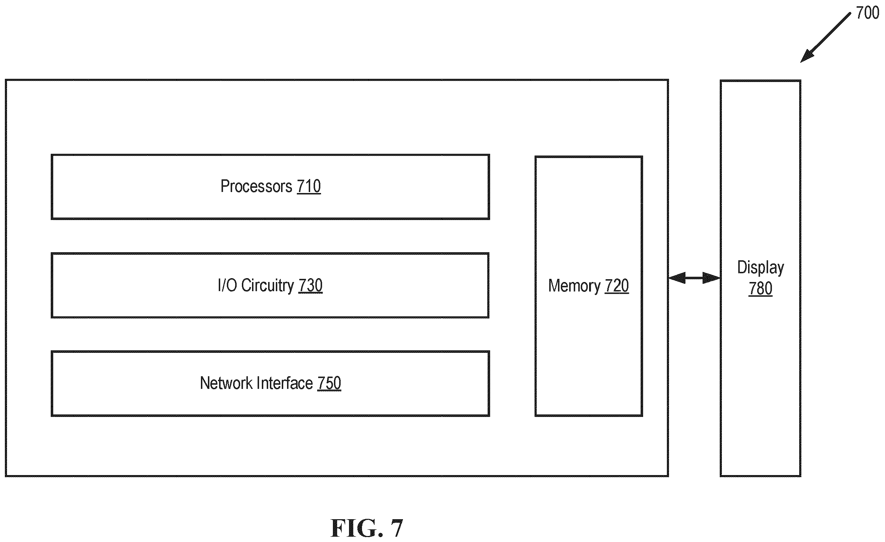

FIG. 6 is a flow diagram illustrating a method 600 of frame interpolation according to one embodiment. In one embodiment, the method 600 may be performed by a device such as a device 700 in FIG. 7. The method 600 may be performed in real-time; e.g., when a user application (e.g., a video game) is running and the frame sequence is being rendered. It is understood that the order of operations shown in the flow diagram of FIG. 6 is a non-limiting example. Alternative embodiments may perform the operations in a different order, combine certain operations, overlap certain operations, etc.

In one embodiment, the method 600 starts with step 610 in which a device generates a first interpolated frame temporally between a first frame and a second frame using a first set of motion vectors that are output from a first motion estimator. The first frame and the second frame are rendered by a game engine renderer. The device at step 620 generates a second interpolated frame temporally between the first frame and the second frame using a second set of motion vectors that are output from a second motion estimator. The device at step 630 further generates a weighting map of weight values based on indications generated by the first motion estimator. A first subset of pixel locations in the weighting map are assigned a weight value of 1 and a second subset of pixel locations in the weighting map are assigned a weight value of 0. The device at step 640 calculates a weighted combination of the first interpolated frame and the second interpolated frame using the weight values to produce the interpolated frame output. The interpolated frame output includes the first subset of pixel locations from the first interpolated frame and the second subset of pixel locations from the second interpolated frame. In one embodiment, the first motion estimator is an optical flow estimator and the second motion estimator is the game engine renderer; more specifically, a game motion estimator in the game engine renderer. In an alternative embodiment, the first motion estimator is the game engine renderer; more specifically, the game motion estimator in the game engine renderer, and the second motion estimator is an optical flow estimator.

In one embodiment, when generating the weighting map, the device further identifies a boundary area of pixels around pixels of the weight value of 0, and assigns one or more weight values between 0 and 1, exclusive, to the boundary area of pixels. The boundary area may include multiple pixels that are between the pixels of the weight value of 0 and pixels of the weight value of 1, and the weight values of the multiple pixels are monotonically increasing from 0 to 1.

In an embodiment where the first motion estimator is the optical flow estimator and the first set of motion vectors are optical motion vectors, each optical motion vector indicates a change in color values from the first frame to the second frame for a corresponding pair of pixels. In this embodiment, the device receives from the optical flow estimator a confidence map indicating a confidence value for each optical motion vector, wherein a lower confidence value corresponds to a greater mismatch in the color values of a pixel pair that defines an optical motion vector, and assigns the weight value of 0 to pixels in the first interpolated frame that are generated using the optical motion vectors with confidence values lower than a threshold. Each of the first frame and the second frame may be down-sampled to generate the optical motion vectors.

In an embodiment where the first motion estimator is the game engine renderer and the first set of motion vectors are in-game motion vectors, the in-game motion vectors describe camera motion for static objects and combined camera and object motion for dynamic objects in the first frame and the second frame. In this embodiment, the device receives from the game engine renderer an object label map indicating pixel locations of special objects in each of the first frame and the second frame, wherein the special objects are graphical object having one or more visual effects in a set of effects, and interpolates each special object between the first frame and the second frame to identify pixels affected by a movement of the special object. The special objects may include one or more of: a semi-transparent object, a shadow of a dynamic object, an object with a screen space effect, and an object with a texture animation effect. The special objects may be graphical objects having one or more visual effects in a set of effects. The device may receive from the game engine renderer an object label map indicating initial pixel locations of special objects in the first frame, and identify pixel locations along a movement path of each special object from the first frame to the second frame according to the in-game motion vectors. The device may further identify affected pixels as a union of the initial pixel locations and the pixel locations along the movement path as an affected area of pixels, and assign the affected pixels in the first interpolated frame the weight value of 0.

FIG. 7 illustrates an example of a device 700 according to one embodiment. In this example, the device 700 includes multiple processors 710 such as a central processing unit (CPU), a graphics processing unit (GPU), a multimedia processor, a digital signal processor, and other general-purpose and/or special-purpose processing circuitry. The CPU and/or the GPU may include multiple cores. The processors 710 may render a video game including a sequence of frames. The processors 710 may further perform frame interpolation according to the method 600 of FIG. 6.

The device 700 further includes a memory 720. The memory 720 may include one or more of a dynamic random-access memory (DRAM) device, a static RAM (SRAM) device, a flash memory device, and/or other volatile or non-volatile memory devices. In one embodiment, the memory 720 stores software executable by the processors 710 to perform frame interpolation. Referring also to FIG. 2 and FIG. 4, non-limiting examples of the software includes the optical flow estimator 110, the game engine renderer 120, the game motion estimator 125, the optical motion interpolator 111, the game motion interpolator 121, the weighted blender 130, the label map generator 212, the weighting map generator 213, the special object interpolator 422, and the weighting map generator 424. Although memory 720 is shown as one block in FIG. 7, it is understood that memory 720 may include multiple memory devices at multiple memory hierarchies.

The device 700 further includes I/O circuitry 730 such as speakers, microphone, camera, user input devices, etc. The device 700 further includes a display 780 (e.g., a liquid crystal module or the like) for displaying images, videos, and computer-generated graphics. In some embodiments, the display 780 may be embedded with touch sensors. In one embodiment, the device 700 may further include network interfaces 750 for accessing the Internet, wireless signals and/or other types of network signals.

The device 700 may be embodied in many form factors, such as a computer system, a gaming device, a smartphone, a mobile device, a handheld device, a wearable device, an entertainment system, an Internet-of-things (IoT) device, and the like. It is understood that the device 700 is simplified for illustration; additional hardware and software components are not shown.

The operations of the flow diagram of FIG. 6 have been described with reference to the exemplary embodiment of FIG. 7. However, it should be understood that the operations of the flow diagram of FIG. 6 can be performed by embodiments of the invention other than the embodiment of FIG. 7, and the embodiment of FIG. 7 can perform operations different than those discussed with reference to the flow diagram.

Various functional components or blocks have been described herein. As will be appreciated by persons skilled in the art, the functional blocks will preferably be implemented through circuits (either dedicated circuits or general-purpose circuits, which operate under the control of one or more processors and coded instructions), which will typically comprise transistors that are configured in such a way as to control the operation of the circuitry in accordance with the functions and operations described herein.

While the invention has been described in terms of several embodiments, those skilled in the art will recognize that the invention is not limited to the embodiments described, and can be practiced with modification and alteration within the spirit and scope of the appended claims. The description is thus to be regarded as illustrative instead of limiting.

## Claims

1. A method for generating an interpolated frame output that is temporally between a first frame and a second frame, comprising:
generating a first interpolated frame temporally between the first frame and the second frame using a first set of motion vectors that are output from a first motion estimator, wherein the first frame and the second frame are rendered by a game engine renderer;
generating a second interpolated frame temporally between the first frame and the second frame using a second set of motion vectors that are output from a second motion estimator;
generating a weighting map of weight values based on indications generated by the first motion estimator, wherein a first subset of pixel locations in the weighting map are assigned a weight value of 1 and a second subset of pixel locations in the weighting map are assigned a weight value of 0; and
calculating a weighted combination of the first interpolated frame and the second interpolated frame using the weight values to produce the interpolated frame output,
wherein the interpolated frame output includes the first subset of pixel locations from the first interpolated frame and the second subset of pixel locations from the second interpolated frame, and
wherein the first motion estimator is one of an optical flow estimator and the game engine renderer, and the second motion estimator is the other one of the optical flow estimator and the game engine renderer.

2. The method of claim 1, wherein generating the weighting map further comprises:
identifying a boundary area of pixels around pixels of the weight value of 0; and
assigning one or more weight values between 0 and 1, exclusive, to the boundary area of pixels.
wherein the boundary area optionally includes multiple pixels that are between the pixels of the weight value of 0 and pixels of the weight value of 1, and the weight values of the multiple pixels are monotonically increasing from 0 to 1.

3. The method of claims 1 or 2, wherein the first motion estimator is the optical flow estimator and the first set of motion vectors are optical motion vectors, each optical motion vector indicating a change in color values from the first frame to the second frame for a corresponding pair of pixels; wherein optionally each of the first frame and the second frame is downsampled to generate the optical motion vectors.

4. The method of claim 3, further comprising:
receiving from the optical flow estimator a confidence map indicating a confidence value for each optical motion vector, wherein a lower confidence value corresponds to a greater mismatch in the color values of a pixel pair that defines an optical motion vector; and
assigning the weight value of 0 to pixels in the first interpolated frame that are generated using the optical motion vectors with confidence values lower than a threshold.

5. The method any of claims 1 or 2, wherein the first motion estimator is the game engine renderer and the first set of motion vectors are in-game motion vectors, wherein the in-game motion vectors describe camera motion for static objects and combined camera and object motion for dynamic objects in the first frame and the second frame.

6. The method of claim 5, further comprising:
receiving from the game engine renderer an object label map indicating pixel locations of special objects in each of the first frame and the second frame, wherein the special objects are graphical object having one or more visual effects in a set of effects; and
interpolating each special object between the first frame and the second frame to identify pixels affected by a movement of the special object;
wherein the special objects optionally include one or more of: a semi-transparent object, a shadow of a dynamic object, an object with a screen space effect, and an object with a texture animation effect.

7. The method of any of claims 5 or 6, further comprising:
receiving from the game engine renderer an object label map indicating initial pixel locations of special objects in the first frame, wherein the special objects are graphical objects having one or more visual effects in a set of effects;
identifying pixel locations along a movement path of each special object from the first frame to the second frame according to the in-game motion vectors;
identifying affected pixels as a union of the initial pixel locations and the pixel locations along the movement path as an affected area of pixels; and
assigning the affected pixels in the first interpolated frame the weight value of 0.

8. A device operative to generate an interpolated frame output that is temporally between a first frame and a second frame, comprising:
a plurality of processors;
a memory; and
a display, wherein the processors are operative to:
generate a first interpolated frame temporally between the first frame and the second frame using a first set of motion vectors that are output from a first motion estimator, wherein the first frame and the second frame are rendered by a game engine renderer;
generate a second interpolated frame temporally between the first frame and the second frame using a second set of motion vectors that are output from a second motion estimator;
generate a weighting map of weight values based on indications generated by the first motion estimator, wherein a first subset of pixel locations in the weighting map are assigned a weight value of 1 and a second subset of pixel locations in the weighting map are assigned a weight value of 0; and
calculate a weighted combination of the first interpolated frame and the second interpolated frame using the weight values to produce the interpolated frame output,
wherein the interpolated frame output includes the first subset of pixel locations from the first interpolated frame and the second subset of pixel locations from the second interpolated frame, and
wherein the first motion estimator is one of an optical flow estimator and the game engine renderer, and the second motion estimator is the other one of the optical flow estimator and the game engine renderer.

9. The device of claim 8, wherein the processors are further operative to:
identify a boundary area of pixels around pixels of the weight value of 0; and
assign one or more weight values between 0 and 1, exclusive, to the boundary area of pixels;
wherein the boundary area optionally includes multiple pixels that are between the pixels of the weight value of 0 and pixels of the weight value of 1, and the weight values of the multiple pixels are monotonically increasing from 0 to 1.

10. The device of claim 9, wherein the first motion estimator is the optical flow estimator and the first set of motion vectors are optical motion vectors, each optical motion vector indicating a change in color values from the first frame to the second frame for a corresponding pair of pixels; wherein optionally each of the first frame and the second frame is down-sampled to generate the optical motion vectors..

11. The device of claim 10, wherein the processors are further operative to:
receive from the optical flow estimator a confidence map indicating a confidence value for each optical motion vector, wherein a lower confidence value corresponds to a greater mismatch in the color values of a pixel pair that defines an optical motion vector; and
assign the weight value of 0 to pixels in the first interpolated frame that are generated using the optical motion vectors with confidence values lower than a threshold.

12. The device of any of claims 8 or 9, wherein the first motion estimator is the game engine renderer and the first set of motion vectors are in-game motion vectors, wherein the in-game motion vectors describe camera motion for static objects and combined camera and object motion for dynamic objects in the first frame and the second frame.

13. The device of claim 12, wherein the processors are further operative to:
receive from the game engine renderer an object label map indicating pixel locations of special objects in each of the first frame and the second frame, wherein the special objects are graphical object having one or more visual effects in a set of effects; and
interpolate each special object between the first frame and the second frame to identify pixels affected by a movement of the special object.

14. The device of claim 13, wherein the special objects include one or more of: a semi-transparent object, a shadow of a dynamic object, an object with a screen space effect, and an object with a texture animation effect.

15. The device of any of claims 12 through 14, wherein the processors are further operative to:
receive from the game engine renderer an object label map indicating initial pixel locations of special objects in the first frame, wherein the special objects are graphical objects having one or more visual effects in a set of effects;
identify pixel locations along a movement path of each special object from the first frame to the second frame according to the in-game motion vectors;
identify affected pixels as a union of the initial pixel locations and the pixel locations along the movement path as an affected area of pixels; and
assign the affected pixels in the first interpolated frame the weight value of 0.
